# EUROPÄISCHE PATENTSCHRIFT

(11) **EP 3 439 836 B1**
(45) Veröffentlichungstag und Bekanntmachung des Hinweises auf die Patenterteilung: **29.03.2023**
(21) Anmeldenummer: 17715699.9
(22) Anmeldetag: 04.04.2017
(51) Int. Cl.: B25J 11/00, B23Q 16/00, B24B 27/00, B25J 9/10

(54) **ROBOTERGESTÜTZTE SCHLEIFVORRICHTUNG**
ROBOT-AIDED GRINDING APPARATUS
DISPOSITIF DE PONÇAGE ROBOTISÉ

(30) Priorität: 07.04.2016 DE 102016106416
(43) Veröffentlichungstag der Anmeldung: 13.02.2019
(73) Patentinhaber: Ferrobotics Compliant Robot Technology GmbH, 4040 Linz (AT)
(72) Erfinder: NADERER, Ronald, 4181 Oberneukirchen (AT)
(74) Vertreter: Westphal, Mussgnug & Partner, Patentanwälte mbB
(86) Internationale Anmeldenummer: PCT/EP2017/057982
(87) Internationale Veröffentlichungsnummer: WO 2017/174577

(56) Entgegenhaltungen:
- DE-A1-102011 006 679
- FR-A1- 2 983 105
- GB-A- 2 205 770
- US-A- 4 604 835
- US-A- 4 860 500
- US-A- 5 355 631

## Beschreibung

### TECHNISCHES GEBIET

Die vorliegende Erfindung betrifft Aspekte einer robotergestützten Schleifvorrichtung, bei der eine Schleifmaschine mit einem rotierendem Schleifwerkzeug von einem Manipulator (z.B. Industrieroboter) geführt wird.

### HINTERGRUND

In der Oberflächenbearbeitung Werkstücken spielen Schleif- und Polierprozesse eine zunehmend wichtige Rolle. In der automatisierten, robotergestützten Fertigung werden Industrieroboter eingesetzt, mit deren Hilfe z.B. Schleifprozesse austomatisiert werden können.

Bei robotergestützten Schleifvorrichtungen wird eine Schleifmaschine mit rotierendem Schleifwerkzeug (z.B. Schleifscheibe) von einem Manipulator, beispielsweise einem Industrieroboter, geführt. Der sogenannte TCP (*Tool Center Point*) des Manipulators bewegt sich während des Schleifprozesses entlang einer (vorab programmierbaren, z.B. mittels Teach-In) Bahn (Trajektorie). Die vorgegebene Bahn des TCP bestimmt für jeden Zeitpunkt Position und Orientierung des TCP und damit der Schleifmaschine. Die Robotersteuerung, die die Bewegung des Manipulators steuert beinhaltet daher in der Regel eine Positionsregelung.

Für oberflächenbearbeitende Prozesse wie Schleifen, Polieren, etc. ist eine Positionsregelung des Werkzeugs meist nicht ausreichend, da die Prozesskraft (die Kraft zwischen Werkzeug und Werkstück) für das Bearbeitungsergebnis eine wichtige Rolle spielt. Daher ist das Werkzeug in der Regel nicht starr mit dem TCP des Manipulators verbunden sondern über ein elastisches Element, das im einfachsten Fall eine Feder sein kann. Um die Prozesskraft einstellen zu können, ist in vielen Fällen eine Regelung (*closed-loop control*) der Prozesskraft nötig. Zur Implementierung einer Kraftregelung kann das Elastische Element ein separater Linearaktor sein, der mechanisch zwischen TCP des Manipulators und das Werkzeug (z.B. zwischen TCP und einer Schleifmaschine, an der eine Schleifscheibe montiert ist) gekoppelt sein. Der Linearaktor kann im Vergleich zum Manipulator relativ klein sein und wird im Wesentlichen für die Regelung der Prozesskraft verwendet, während der Manipulator das Werkzeug (samt Linearaktor) positionsgeregelt entlang der zuvor programmierten Trajektorie bewegt.

In der Praxis kann z.B. beim Schleifen der Verschleiß des Werkzeugs Probleme bereiten. Während des Schleifprozesses nutzt sich eine Schleifscheibe ab und in der Folge wird der Durchmesser der Schleifscheibe geringer. Als Folge davon wird nicht nur die Umfangsgeschwindigkeit der Schleifscheibe (die ebenfalls ein relevanter Prozessparameter sein kann) geringer, sondern es ändert sich die Relativposition zwischen der Schleifmaschine (insbesondere der Drehachse des Schleifwerkzeugs) in Bezug auf die Werkstückoberfläche. Je mehr sich die Schleifscheibe abnützt, desto näher muss die Schleifmaschine an die Werkstückoberfläche herangeführt werden.

Die erwähnte verschleißbedingte Reduktion der Größe des Schleifwerkzeugs (Schleifscheibe) hat unter anderen zwei Konsequenzen. Bei vorgegebener Trajektorie des TCP kann in bestimmten Situationen das Schleifwerkzeug auf die Werkstückoberfläche zu spät (und damit an der falschen Stelle) aufsetzen. Des Weiteren verändert sich das Spaltmaß zwischen der Werkstückoberfläche und einer eventuellen Schutzabdeckung, welche an der Schleifmaschine montiert ist und die Schleifscheibe teilweise umgibt. Die Größe des Spaltmaßes hat auch Auswirkungen auf die Effektivität einer eventuell vorhandenen Absaugung (zum Absaugen des Schleifstaubs).

Robotergestützte Schleifvorrichtungen sind beispielweise aus der Druckschrift DE 10 2011 006 679 A1 bekannt. Die Druckschrift US 5,355,631 A wird als nächstliegender Stand der Technik gesehen und offenbart eine automatische Schleifvorrichtung mit einer Schleifmaschine, die an einer Werkzeugmontageplatte angeordnet ist. Die Werkzeugmontageplatte ist mit pneumatischen Zylindern gekoppelt, um eine Prozesskraft auf die Schleifscheibe auszuüben. Außerdem ist ein Sensor vorgesehen, der anzeigt, dass der Durchmesser der Schleifscheibe wegen des Verschleißes zu klein ist, um eine korrekte Funktionsweise der Vorrichtung zu gewährleisten, und dass die Werkzeugmontageplatte eingestellt werden muss.

Eine der vorliegenden Erfindung zugrunde liegende Aufgabe kann also darin gesehen werden, eine robotergestützte Schleifvorrichtung zur Verfügung zu stellen, welche negative oder unerwünschte Auswirkungen des Verschleißes des Schleifwerkzeugs zumindest teilweise kompensiert.

### ZUSAMMENFASSUNG

Die oben genannte Aufgabe wird durch die Vorrichtung gemäß dem Anspruch 1 sowie mittels eines Verfahrens gemäß dem Anspruch 8 gelöst. Verschiedene Ausführungsbeispiele und Weiterentwicklungen der Erfindung sind Gegenstand der abhängigen Ansprüche.

Es wird eine Vorrichtung zum robotergestützten Schleifen beschrieben. Erfindungsgemäß weist die Vorrichtung folgendes auf: einen Manipulator, einen Linearaktor und eine Schleifmaschine mit einem rotierenden Schleifwerkzeug. Die Schleifmaschine ist mit dem Manipulator über den Linearaktor gekoppelt. Des Weiteren weist die Vorrichtung einen Endanschlag auf, wobei die Position des Endanschlags einstellbar ist. Außerdem umfasst die Vorrichtung eine Steuerung, die einen Tool-Center-Point des Manipulators an eine Referenzposition bewegen, in der das rotierende Schleifwerkzeug eine Oberfläche berührt, und die Position des Endanschlages abhängig von einer aktuellen Auslenkung des Aktors einzustellen kann.

Des Weiteren wird ein Verfahren zum Betrieb einer robotergestützten Schleifvorrichtung offenbart, die einen Manipulator, einen Linearaktor mit einem einstellbaren Endanschlag und eine Schleifmaschine mit einem rotierenden Schleifwerkzeug aufweist. Dabei ist die Schleifmaschine mit Manipulator über den Linearaktor gekoppelt. Erfindungsgemäß weist das Verfahren das Einstellen einer Position des Endanschlags auf. Das Einstellen der Position des Endanschlags umfasst das Bewegen eines Tool-Center-Points des Manipulators an eine Referenzposition, in der das Schleifwerkzeug eine Oberfläche berührt, und das Einstellen der Position des Endanschlages abhängig von einer aktuellen Auslenkung des Aktors.

### KURZE BESCHREIBUNG DER ABBILDUNGEN

Die Erfindung wird nachfolgend anhand von den in den Abbildungen dargestellten Beispielen näher erläutert. Die Darstellungen sind nicht zwangsläufig maßstabsgetreu und die Erfindung beschränkt sich nicht nur auf die dargestellten Aspekte. Vielmehr wird Wert darauf gelegt, die der Erfindung zugrunde liegenden Prinzipien darzustellen. Zu den Abbildungen:
Figur 1 ist eine exemplarische schematische Darstellung einer robotergestützten Schleifvorrichtung mit einer Schleifmaschine, die mit einem Industrieroboter mittels eines kraftgeregelten Linearaktors gekoppelt ist.
Figur 2 illustriert anhand von schematischen Skizzen die Auswirkung eines durch Verschleiß reduzierten Durchmessers einer Schleifscheibe auf die Position einer Schutzabdeckung.
Figur 3 ist eine schematische Darstellung eines Ausführungsbeispiels, bei dem die Schutzabdeckung einer Schleifscheibe über eine Rastvorrichtung mit der Schleifmaschine gekoppelt ist.
Figur 4 ist eine Vorderansicht der Schleifscheibe samt Schutzabdeckung aus Fig. 3 bei der automatischen Einstellung der Position der Schutzabdeckung mit Hilfe einer Auflage und mindestens eines Anschlags.
Figur 5 umfasst eine Seitenansicht (normal zur Drehachse der Schleifscheibe, Fig. 5a) sowie eine Vorderansicht (parallel zur Drehachse der Schleifscheibe, Fig. 5b) eines Beispiels der Rastvorrichtung aus Fig. 3 mit mehr Details.
Figur 6 ist eine schematische Darstellung eines weiteren Ausführungsbeispiels, bei dem die Schutzabdeckung einer Schleifscheibe nicht mit der Schleifmaschine, sondern starr mit dem TCP des Manipulators verbunden ist; in Fig. 6a ist die Schleifscheibe neu und in Fig. 6b ist die Schleifscheibe schon teilweise verschlissen.
Figur 7 illustriert schematisch das Problem, dass bei fest vorgegebener Trajektorie des TCP (aufgrund von Verschleiß) kleinere Schleifscheiben (Fig. 7b) später auf dem Werkstück aufsetzen als größere Schleifscheiben (Fig. 7a).
Figur 8 ist eine schematische Darstellung eines weiteren Ausführungsbeispiels, bei dem der Linearaktor, der Schleifmaschine und TCP verbindet, an einem einstellbaren Endanschlag anliegt, solange kein Kontakt zwischen Werkstück und Schleifwerkstück besteht; die Einstellung des Endanschlags kann abhängig von der Größe des Schleifwerkzeugs erfolgen.
Figur 9 zeigt eine Alternative zu dem in Fig. 8 dargestellten Ausführungsbeispiel.
Figur 10 zeigt eine weitere Alternative zu dem in Fig. 8 dargestellten Ausführungsbeispiel mit einer Kolbenstangenbremse statt eines zusätzlichen Aktors zur Verstellung des Endanschlags.
Figur 11 ist ein Flow-Chart, das ein exemplarisches Verfahren zur automatischen Einstellung/Anpassung des Endanschlags illustriert.

### DETAILLIERTE BESCHREIBUNG

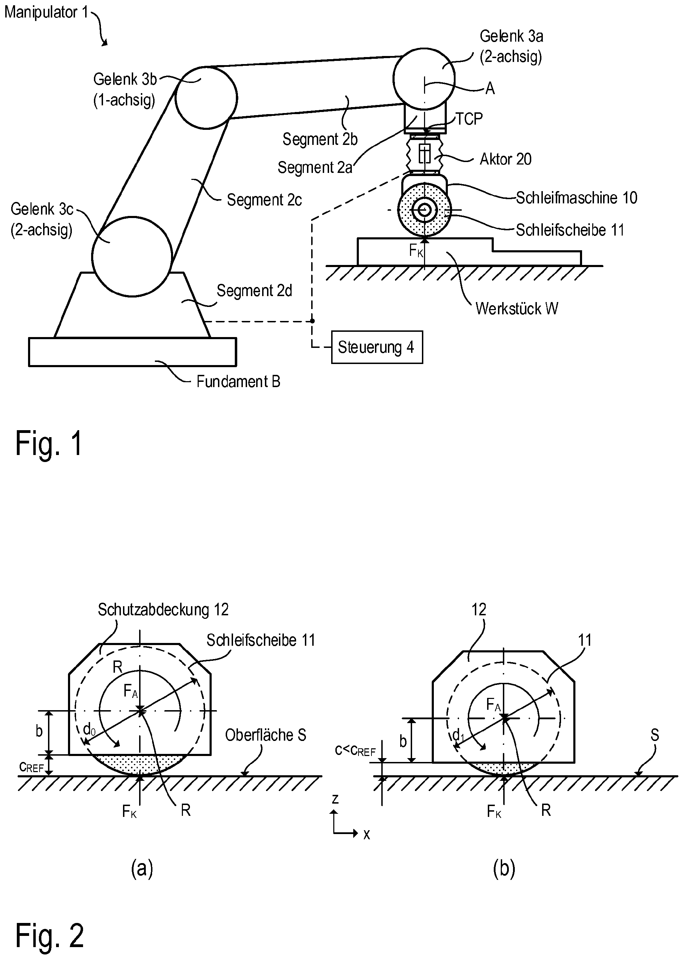

Bevor verschiedene Ausführungsbeispiele im Detail erläutert werden, wird zunächst ein allgemeines Beispiel einer robotergestützten Schleifvorrichtung beschrieben. Diese umfasst einen Manipulator 1 (beispielsweise einen Industrieroboter) und eine Schleifmaschine 10 mit rotierendem Schleifwerkzeug (Schleifscheibe), wobei die Schleifmaschine 10 mit dem *Tool-Center-Point* (TCP) des Manipulators 1 über einen Linearaktor 20 gekoppelt ist. Im Falle eines Industrieroboters mit sechs Freiheitsgraden kann der Manipulator aus vier Segmenten 2a, 2b, 2c und 2d aufgebaut sein, die jeweils über Gelenke 3a, 3b und 3c verbunden sind. Das erste Segment ist dabei meist starr mit einem Fundament B verbunden (was jedoch nicht zwangsläufig der Fall sein muss). Das Gelenk 3c verbindet die Segmente 2c und 2d. Das Gelenk 3c kann 2-achsig sein und eine Drehung des Segments 2c um eine horizontale Drehachse (Elevationswinkel) und eine vertikale Drehachse (Azimutwinkel) ermöglichen. Das Gelenk 3b verbindet die Segmente 2b und 2c und ermöglicht eine Schwenkbewegung des Segments 2b relativ zur Lage des Segments 2c. Das Gelenk 3a verbindet die Segmente 2a und 2b. Das Gelenk 3a kann 2-achsig sein und daher (ähnlich wie das Gelenk 3c) eine Schwenkbewegung in zwei Richtungen ermöglichen. Der TCP hat eine feste Relativposition zum Segment 2a, wobei dieses üblicherweise noch ein Drehgelenk (nicht dargestellt) umfasst, dass eine Drehbewegung um eine Längsachse A des Segments 2a ermöglicht (in Fig. 1 als strichpunktierte Line eingezeichnet). Jeder Achse eines Gelenks ist ein Aktor zugeordnet, der eine Drehbewegung um die jeweilige Gelenksachse bewirken kann. Die Aktoren in den Gelenken werden von einer Robotersteuerung 4 gemäß einem Roboterprogramm angesteuert. Der TCP kann (in bestimmten Grenzen) beliebig positioniert werden (mit beliebiger Orientierung der Achse A).

Der Manipulator 1 ist üblicherweise positionsgeregelt, d.h. die Robotersteuerung kann die Pose (Position und Orientierung) des TCP festlegen und diesen entlang einer vordefinierten Trajektorie bewegen. Wenn der Aktor 20 an einem Endanschlag anliegt, ist mit der Pose des TCP auch die Pose des Schleifwerkzeugs definiert. Wie eingangs bereits erwähnt, dient der Aktor 20 dazu, während des Schleifprozesses die Kontaktkraft (Prozesskraft) zwischen Werkzeug (Schleifscheibe 11) und Werkstück W auf einen gewünschten Wert einzustellen. Eine direkte Regelung der Prozesskraft durch den Manipulator 1 ist für Schleifanwendungen üblicherweise zu ungenau, da durch die hohe Massenträgheit der Segmente 2a-2c des Manipulators 1 eine schnelle Kompensation von Kraftspitzen (z.B. beim Aufsetzen des Schleifwerkzeugs auf das Werkstück 40) mit herkömmlichen Manipulatoren praktisch nicht möglich ist. Aus diesem Grund ist die Robotersteuerung dazu ausgebildet, die Pose (Position und Orientierung) des TCP zu regeln, während die Regelung der Kontaktkraft (siehe auch Fig. 2, Kontaktkraft F_{K}) ausschließlich vom Aktor 20 bewerkstelligt wird, der zwischen Schleifmaschine 10 und Manipulator 1 gekoppelt ist.

Wie bereits erwähnt kann während des Schleifprozesses die Kontaktkraft F_{K} zwischen Werkzeug (Schleifscheibe 11) und Werkstück W mit Hilfe des (Linear-) Aktors 20 und einer Kraftregeleinheit (die beispielsweise in der Steuerung 4 implementiert sein kann) so eingestellt werden, dass die Kontaktkraft F_{K} zwischen Schleifwerkzeug und Werkstück W einem vorgebbaren Sollwert entspricht. Die Kontaktkraft ist dabei eine Reaktion auf die Aktorkraft F_{A}, mit der der Linearaktor 20 auf die Werkstückoberfläche S drückt (siehe auch Fig. 2). Bei fehlendem Kontakt zwischen Werkstück W und Schleifscheibe 11 fährt der Aktor 20 aufgrund der fehlenden Kontaktkraft F_{K} gegen einen Endanschlag (in Fig. 1 nicht dargestellt oder in den Aktor 20 integriert). Die Positionsregelung des Manipulators 1 (die ebenfalls in der Steuerung 4 implementiert sein kann) kann vollkommen unabhängig von der Kraftregelung des Aktors 20 arbeiten. Der Aktor 20 ist nicht verantwortlich für die Positionierung der Schleifmaschine 10, sondern lediglich für das Einstellen und Aufrechterhalten der erwünschten Kontaktkraft während des Schleifprozesses und zur Erkennung von Kontakt zwischen Werkzeug und Werkstück. Ein Kontakt kann z.B. erkannt werden, wenn die Auslenkung des Aktors 20 ausgehend vom Endanschlag keiner wird, oder die Änderung der Auslenkung des Aktors 20 negativ wird.

Der Aktor kann ein pneumatischer Aktor sein, z.B. ein doppeltwirkender Pneumatikzylinder. Jedoch sind auch andere pneumatische Aktoren anwendbar wie z.B. Balgzylinder und Luftmuskel. Als Alternative kommen auch elektrische Direktantriebe (getriebelos) in Betracht. Im Falle eines pneumatischen Aktors kann die Kraftregelung in an sich bekannter Weise mit Hilfe eines Regelventils, eines Reglers (implementiert in der Steuerung 4) und eines Druckluftspeichers realisiert werden. Die konkrete Implementierung ist jedoch für die weitere Erläuterung nicht wichtig und wird daher auch nicht detaillierter beschrieben.

Figur 2 zeigt - in Vorderansicht (d.h. in Richtung der Drehachse R der Schleifscheibe 11) - ein Beispiel einer Schleifscheibe 11, die teilweise von einer Schutzabdeckung 12 umgeben ist. In Fig. 2 wurden der Übersichtlichkeit wegen die Schleifmaschine 10, der Aktor 20 und der Manipulator 1 weggelassen. Fig. 2a (links) und 2b (rechts) unterscheiden sich lediglich in der Größe der Schleifscheibe 11. In Fig. 2a ist der Durchmesser d₀ der Schleifscheibe 11 größer als in Fig. 2b, in der der Durchmesser d₁ verschleißbedingt kleiner ist (d₁<d₀). Wenn - wie üblich die Schutzabdeckung 12 an der Schleifmaschine 10 (in Fig. 2 nicht gezeigt) montiert ist, bewegt sich die Schutzabdeckung 12 mit der mit der Schleifmaschine 10 (und deren Rotationsachse R) mit. Wenn die Schleifscheibe 11 eine Oberfläche S (z.B. eines Werkstücks) berührt, hängt im vorliegenden Beispiel das Spaltmaß c_{REF} bzw. c (der Abstand zwischen der Oberfläche S und der unterkante der Schutzabdeckung 12) vom Durchmesser der Schleifscheibe 11 ab.

Im Fall von Fig. 2a (neue Schleifscheibe mit Durchmesser d₀) ist das Spaltmaß c_{REF} gleich der Differenz zwischen Radius d₀/2 der Schleifscheibe und dem Abstand b zwischen Drehachse R und der Unterkante der Schutzabdeckung. (c_{REF} = d₀/2-b). Der Wert des Abstands b ist dabei während des Betriebs der Schleifmaschine 10 konstant, da die Schutzabdeckung 12 wie üblich fest an der Schleifmaschine 10 montiert ist. Im Fall von Fig. 2b (verschlissene Schleifscheibe mit Durchmesser d₁) ist das Spaltmaß c kleiner (c<c_{REF}), weil der Durchmesser d₁ der Schleifscheibe 11 kleiner ist als im Fall von Fig. 2a ((c = d₁/2-b). Das Spaltmaß c bzw. c_{REF} kann eine Rolle spielen, wenn mit der Schutzabdeckung 12 zur Absaugung des Schleifstaubs eine Absaugung (nicht dargestellt) gekoppelt ist. Die Luft wird dann durch den Spalt zwischen Oberfläche S und Schutzabdeckung 12 angesaugt. Für eine gute Saugwirkung sollte das Spaltmaß einem - von der Anwendung und Implementierung abhängigen - Wert c_{REF} entsprechen, der in der Größenordnung von einigen wenigen Zentimetern liegt. In der Praxis kann eine neue Schleifscheibe mit z.B. 150 mm Durchmesser (d₀=150 mm) bis auf 75 mm abgenutzt werden. In der Praxis bedeutet das, dass bei neuer Schleifscheibe das Spaltmaß c größer als c_{REF} gewählt werden muss (was eine suboptimale Effektivität der Absaugung zur Folge hat), sodass bei abgenutzter Schleifscheibe das Spaltmaß c immer noch größer Null ist (zumindest einige wenige Millimeter). Alternativ kann die Position der Schutzabdeckung von einer Bedienperson in regelmäßigen Abständen manuell verändert werden (um das Maß b zu verändern), was vergleichsweise hohen Aufwand verursacht und in der robotergestützten Fertigung unerwünscht ist.

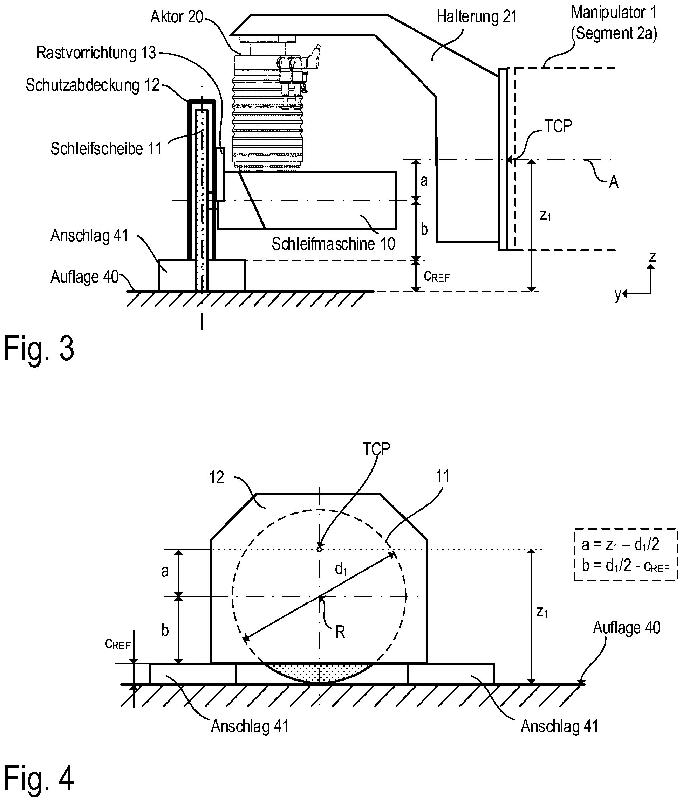

Das in Fig. 3 gezeigte Ausführungsbeispiel ermöglicht die automatische Anpassung des Spaltmaßes c, sodass dieses auch bei variierender Größe der Schleifscheibe 11 annähernd konstant bleibt und dem (Soll-) Wert c_{REF} entspricht (c≈c_{REF}). Fig. 3 zeigt in einer Seitenansicht (Blickrichtung normal auf die Drehachse R der Schleifscheibe) eine Schleifmaschine 10 mit einer Schleifscheibe 11, die von einer Schutzabdeckung 12 teilweise umgeben ist. Die Schleifmaschine 10 ist über den Aktor 20 mit dem Manipulator 1 mechanisch verbunden. Im dargestellten Beispiel ist zwischen Aktor 20 und dem äußersten Segment 2a des Manipulators 1 (siehe auch Fig. 1) eine Halterung 21 angeordnet, die annähernd eine L-Form aufweist. Die Halterung 21 hat den Zweck, den Linearaktor 20 nicht koaxial zur Achse A des Segment 2a am Manipulators 1 zu montieren (wie in Fig. 1 dargestellt), sondern um 90° verkippt, sodass die Drehachse R der Schleifmaschine im Wesentlichen parallel zur Achse A liegt. Je nach Anwendung und spezifischer Ausgestaltung der Roboterzelle kann die Halterung auch weggelassen werden (Aktor 20 ist dann direkt am Manipulator 1 montiert) oder eine Halterung verwendet werden, die einen anderen Winkel als 90° aufweist.

Anders als zuvor in Bezug auf Fig. 2 beschrieben ist die Schutzabdeckung 12 nicht starr an der Schleifmaschine 10 fixiert, sondern über eine Rastvorrichtung 13, welche eine Verschiebung der Schutzabdeckung 12 relativ zur Schleifmaschine 10 ermöglicht. Die Rastvorrichtung 13 ist konstruiert, dass die Schutzabdeckung 12 linear im rechten Winkel zur Drehachse R (und in der Regel auch parallel zur Wirkrichtung des Aktors 20) relativ zum Gehäuse der Schleifmaschine (und damit auch relativ zur Schleifscheibe) verschiebbar ist. Ändert sich der Durchmesser der Schleifscheibe 11 aufgrund von Verschleiß beispielsweise von d₀ auf d₁, dann kann die Schutzabdeckung mit Hilfe der Rastvorrichtung 13 um einen Wert (d₀-d₁)/2 angehoben werden, um während des Schleifens ein Spaltmaß c zwischen der Werkstückoberfläche und der Unterseite der Schutzabdeckung zu gewährleisten, was zumindest ungefähr dem Sollwert c_{REF} entspricht (vgl. auch Fig. 2). Wird die Schutzabdeckung 12 verschoben, kann die Rastvorrichtung 13 an der gewünschten Position (Abstand b) einrasten und die Schutzabdeckung 12 bleibt an der gewünschten Relativposition zur Schleifmaschine (mit einem Abstand c_{REF} zum Werkstück).

Statt einer Rastvorrichtung kann auch eine andere Verstellvorrichtung, mit deren Hilfe die Schutzabdeckung 12 an verschiedenen Positionen (relativ zur Schleifmaschine 10) fixiert werden kann. Eine mögliche Alternative wäre z.B. eine selbsthemmende Verstellvorrichtung, in der zwei über Reibung gekoppelte Elemente der Abstand b (siehe Fig. 3) einstellbar ist. Die Haftreibung zwischen den beiden Elementen in der Verstellvorrichtung muss in diesem Fall deutlich größer sein, als die Gewichtskraft und möglicherweise auftretende Trägheitskräfte der Schutzabdeckung 12. Zum Verändern des Abstandes b muss eine Kraft aufgewendet werden, die größer ist als die Haftreibung in der Verstellvorrichtung. Eine weitere alternative Verstellvorrichtung wäre eine (Kolben-) Stangenbremse, die jedoch in der Regel nicht selbsthemmend ist, d.h. nach dem Lösen der Stangenbremse (vor dem Verstellen) würde die Schutzabdeckung 12 an die unterste Position fallen.

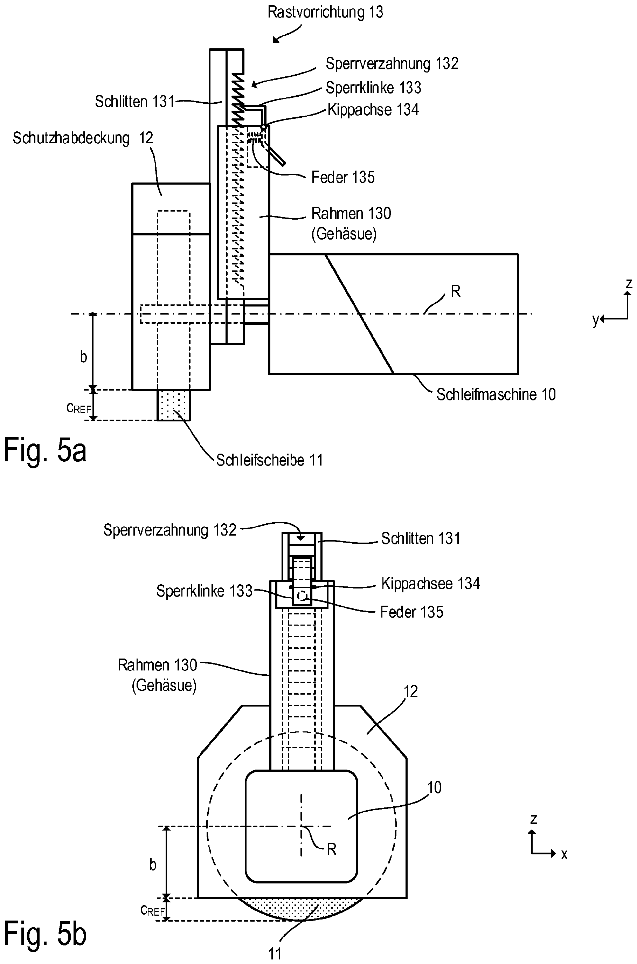

Da die Schleifscheibe während des normalen Betriebs kleiner wird, genügt es, wenn die Verstellvorrichtung (z.B. die Rastvorrichtung 13) eine Anpassung der Position der Schutzabdeckung 12 (d.h. des Abstands b) in nur eine Richtung - hin zu kleineren Abständen b - ermöglicht, wobei beim Wechsel der Schleifscheibe 11 die Verstellvorrichtung auf einen maximalen Abstand (b_{MAX}) zurückgesetzt werden kann. Die Rastvorrichtung kann daher mindestens eine Sperrklinke aufweisen, welche eine lineare Verstellung der Position in einer Richtung (hin zu kleineren Abständen b) ermöglicht, wohingegen die Verstellung der Position in die andere Richtung (hin zu größeren Abständen b) durch die Sperrklinke blockiert wird (ähnlich wie bei einer Ratsche, siehe auch Fig. 5).

Angenommen die Schutzabdeckung 12 ist anfangs so eingestellt, dass bei neuer, unverschlissener Schleifscheibe 11 mit Durchmesser d₀ (z.B. d₀=150 mm) das Spaltmaß c genau dem Sollwert c_{REF} entspricht (c=c_{REF}). Nach einigen Schleifvorgängen ist die Schleifscheibe teilweise verschlissen und der Durchmesser der Schleifscheibe 11 hat sich reduziert auf den Wert d₁ (z.B. di=140 mm), was zur Folge hat, dass das Spaltmaß c nun (z.B. um 10 mm) kleiner ist (c<c_{REF}). Um das Spaltmaß c wieder auf den ursprünglichen Wert zu vergrößern, muss der Abstand b angepasst werden (im vorliegenden Beispiel müsste b um 10mm reduziert werden). Um die Rastvorrichtung 13, welche keinen eigenen Antrieb benötigt, bei teilweise abgenutzter Schleifscheibe automatisiert verstellen zu können, ist in der Nähe des Manipulators (z.B. neben dem Werkstück W in der Roboterzelle) eine Auflage 40 (z.B. ein plane Referenzoberfläche) mit mindestens einem Anschlag 41 angeordnet. Der Anschlag 41 definiert eine Ebene, welche parallel zur Auflage 40 liegt und zu dieser einen Abstand aufweist, der dem Sollwert c_{REF} entspricht. Der Manipulator 1 wird so programmiert, dass er von Zeit zu Zeit (z.B. nach jedem oder nach jedem zweiten Schleifvorgang) die Schleifmaschine 10 zu der Auflage 40 hin in eine Referenzposition bewegt und die Schleifscheibe 11 - ähnlich wie auf ein Werkstück, jedoch bei stillstehender Schleifscheibe - gegen die Auflage 40 drückt. Der mindestens eine Anschlag 41 ist dabei so angeordnet, dass - wenn die Schleifmaschine sich in der Referenzposition befindet - die Unterseite der Schutzabdeckung 12 auf dem mindestens einen Anschlag 41 aufliegt. Durch das Andrücken der Schleifscheibe 11 an die Auflage 40 (Referenzoberfläche) wird die Schutzabdeckung 12 so weit nach oben geschoben bis das Spaltmaß c wieder (annähernd) dem Sollwert c_{REF} entspricht.

Der oben beschriebene Einstellvorgang für das Spaltmaß c_{REF} ist in Fig. 4 dargestellt, in der die Schleifscheibe 11 samt Schutzabdeckung 12 dargestellt ist. Fig. 4 ist eine zu Fig. 3 Vorderansicht (in Richtung der Drehachse R), die zu der Seitenansicht in Fig. 3 passt. Durch das Bewegen des Manipulators in die Referenzposition, wird der Abstand b auf den Wert d₁/2-c_{REF} eingestellt, weil in der Referenzposition die Schleifscheibe 11 wie in Fig. 4 dargestellt die Auflage 40 berührt (wobei die Drehachse R im Wesentlichen parallel zur Auflage 40 liegt) und das Spaltmaß c_{REF} durch den mindestens einen Anschlag 41 vorgegeben wird. Mit Hilfe der erwähnten Kraftregelung des Aktors 20 kann die Aktorkraft bei diesem Einstellvorgang so eingestellt werden, dass die Schleifscheibe 11 satt an der Auflage 40 anliegt. Wird die Schleifmaschine 10 wieder von der Auflage abgehoben und wegbewegt, kann die Schutzabdeckung 12 nicht mehr in die vorherige Position zurückrutschen, da die Verstellvorrichtung aufgrund der Selbsthemmung dies verhindert (bei Verwendung der Rastvorrichtung 13 z.B. durch eine Sperrklinke, alternativ durch Haftreibung wie oben beschrieben).

In Fig. 5 ist - als eine Implementierung der Verstellvorrichtung zwischen Schutzabdeckung 12 und Schleifmaschine 10 - ein Ausführungsbeispiel der Rastvorrichtung 13 aus Fig. 3 genauer dargestellt. Fig. 5a zeigt dabei eine Seitenansicht (Blickrichtung normal zur Drehachse R) und Fig. 5b eine korrespondierende Ansicht von hinten (Blickrichtung parallel zur Drehachse R). Die Schleifscheibe 11 ist über die Motorwelle (Drehachse R) mit dem Motor der Schleifmaschine 10 verbunden. Die Schutzabdeckung 12 ist über die Rastvorrichtung 13 mit der Schleifmaschine 10 verbunden. Die Funktion des Rastmechanismus wurde bereits weiter oben erläutert. Fig. 5 dient zur Illustration einer möglichen Implementierung des Rastmechanismus. Demnach umfasst die Rastvorrichtung 13 einen Rahmen 130, an dem ein Schlitten 131 linear verschiebbar gelagert ist. Im vorliegenden Beispiel ist der Schlitten in z-Richtung verschiebbar. Der Schlitten weist eine Sperrverzahnung 132 auf, in die eine Sperrklinke 133 eingreift, die mit einer Feder 135 vorgespannt und um eine Kippachse 134 am Rahmen 130 gelagert ist. Die Feder 135 drückt die Sperrklinke 133 gegen die Sperrverzahnung 132. Die Sperrverzahnung 132 bewirkt, dass der Schlitten zwar in z-Richtung verschoben werden kann (Abstand b wird kleiner), jedoch nur dann in die Ausgangsposition (gegen die z-Richtung) zurückgeschoben werden kann, wenn die Sperrklinke 133 manuell gegen die Federkraft der Feder 135 angehoben wird.

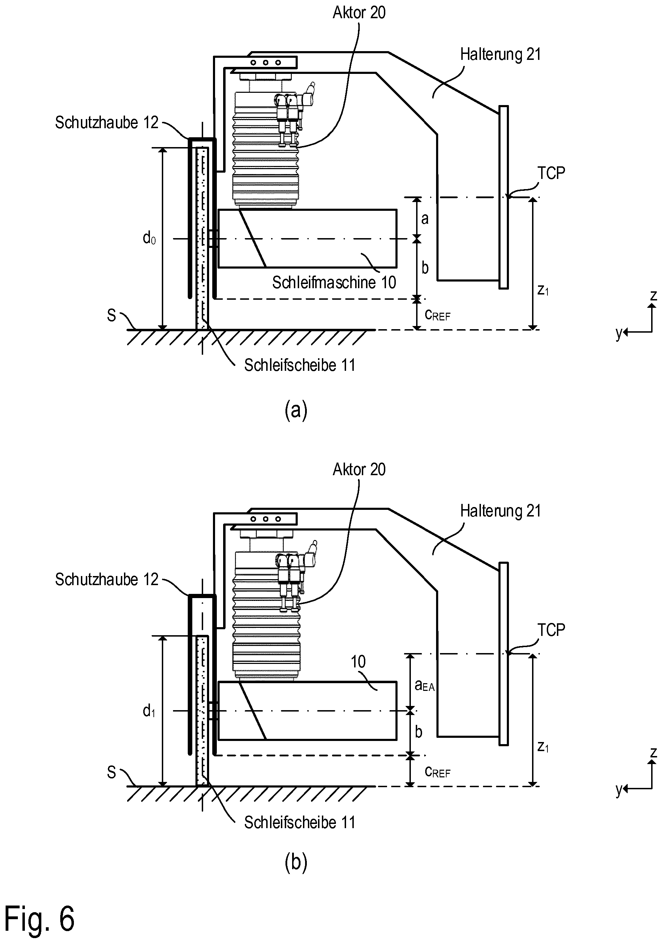

In dem Beispiel aus Fig. 3 und 4 ist der Abstand (normal zur Oberfläche) zwischen einer Werkstückoberfläche und dem TCP des Manipulators gleich z₁. Die Trajektorie des TCP des Manipulators ist in der Regel so programmiert, dass der TCP in einem bestimmten Abstand zi der Werkstückoberfläche folgt. Während eines Schleifprozesses ist der Abstand zi üblicherweise durch das Roboterprogramm vorgegeben. Eine verschleißbedingte Verringerung des Schleifscheibendurchmessers d₀ auf einen Wert d₁ (d₁<d₀) wird dadurch kompensiert, dass die Auslenkung a des Aktors 20 entsprechen um den Wert Δa (Δa =(d₀-d₁)/2) vergrößert wird. Der Aktor 20 muss seine Auslenkung a anpassen, um die gewünschte Kontaktkraft (siehe Fig. 1 und 2) beizubehalten. Die Schleifmaschine 10 rückt dabei um den Wert Δa näher an das Werkstück. Damit die Position der Schutzabdeckung 12 relativ zur Oberfläche S des Werkstücks W sich bei variierendem Schleifschiebendurchmesser nicht ändert ist gemäß dem Ausführungsbeispiel aus Fig. 6 die Schutzabdeckung 12 nicht an der Schleifmaschine montiert, sondern starr mit dem TCP des Manipulators 1 verbunden (z.B. mittels eines Winkels 21' an der Halterung 21 befestigt). In Fig. 6a ist die Schleifscheibe 11 neu und unverschlissen (Durchmesser d₀), in Fig. 6b ist bei sonst gleicher Situation die Schleifscheibe teilweise verschlissen (Durchmesser d₁<d₀).

Da im vorliegenden Ausführungsbeispiel die Schutzabdeckung 12 starr (d.h. nicht über den Aktor 20) mit dem TCP des Manipulators 1 verbunden ist, ist das Spaltmaß c unabhängig von dem Durchmesser der Schleifscheibe 11, sondern hängt nur von der Lage des TCP relativ zur Oberfläche S des Werkstücks ab (siehe Fig. 6, Abstand z₁). Die Lage des TCP kann dabei so programmiert werden, dass das Spaltmaß dem gewünschten Sollwert entspricht (c=c_{REF}). Die Abstände a und b hingegen hängen variieren bei kleiner werdendem Durchmesser der Schleifscheibe, wobei b kleiner und a größer wird und die Summe a+b immer gleich der Differenz z₁-c_{REF} ist. Des Weiteren gilt b=d₁/2-c_{REF} und a=zi-di/2. Durch die Fixierung der Schutzabdeckung 12 am TCP (d.h. Relativposition zwischen TCP und Schutzabdeckung ändert sich nicht, während die Schleifscheibe sich abnutzt) kann auf die Rastvorrichtung, wie sie im vorherigen Ausführungsbeispiel verwendet wird, verzichtet werden.

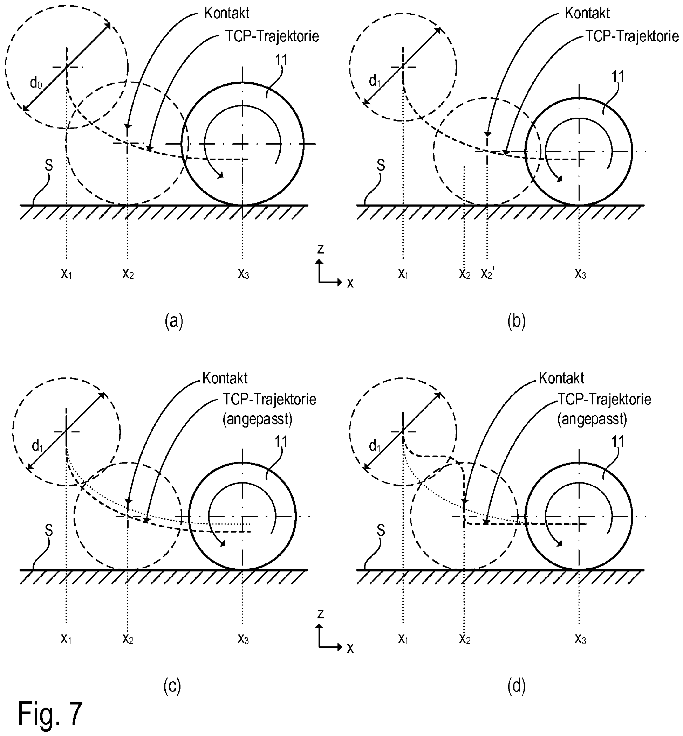

In Fig. 7 ist eine weitere Auswirkung der Reduktion des Schleifscheibendurchmessers aufgrund von Verschleiß dargestellt. Das Diagramm in Fig. 7a zeigt schematisch den Beginn eines Schleifvorgangs, wobei die Schleifmaschine 10 mit einer rotierenden Schleifscheibe (neu, Durchmesser d₀) vom Manipulator 1 auf eine zu bearbeitende Oberfläche S zubewegt wird. Die Trajektorie des TCP ist exemplarisch in Fig. 7a eingezeichnet. Der TCP bewegt sich dabei in x-Richtung mit einer gewünschten Vorschubgeschwindigkeit vₓ, während er sich (ausgehend von der Position x₁) der Oberfläche S nähert. In dieser Phase ist der Aktor 20 an seinem Endanschlag bei maximaler Auslenkung a_{MAX}. An der Position x₂ setzt die Schleifscheibe 11 auf der Oberfläche S auf, und die Auslenkung a des Aktor nimmt bei aktivierter Kraftregelung ab (a<a_{MAX}). An der Position x₃ befindet sich die Schleifscheibe in einem stationären Schleifprozess mit konstanter Vorschubgeschwindigkeit.

In Fig. 7b bis 7d sind verschiedene Situationen gezeigt, in der der Durchmesser der Schleifscheibe 11 z.B. aufgrund von Verschleiß reduziert ist (d₁<d₀). In dem Diagramm der Fig. 7b ist zu sehen, dass bei unveränderter Trajektorie des TCP die kleinere Schleifscheibe 11 (mit Durchmesser d₁) nicht wie in Fig. 7a an der Stelle x₂ auf die Oberfläche aufsetzt, sondern an der Stelle x₂' (wobei x₂'>x₂), was in manchen Anwendungen unerwünscht sein kann, weil der bearbeitete Oberflächenbereich nicht mehr der gleiche ist wie im Fall der Fig. 7a. Dieses Problem kann z.B. dadurch behoben werden, indem die Trajektorie des TCP näher an die Oberfläche S herangerückt wird. Diese Situation ist in Fig. 7c dargestellt. Die TCP-Trajektorie wird also um den Betrag (d₀-d₁)/2 zur Oberfläche S hin (gegen die z-Richtung) verschoben. Dieser Ansatz erfordert jedoch eine Anpassung (Verschiebung) der TCP-Trajektorie abhängig von der Abnutzung der Schleifscheibe 11, was in manchen Fertigungsstraßen unerwünschten Mehraufwand mit sich bringt.

Ein anderer Ansatz ist in Fig. 7d dargestellt. In diesem Fall wird die TCP-Trajektorie so programmiert, dass die Schleifmaschine an der Position x₂ sich nur vertikal zur Oberfläche S bewegt, die Trajektorie an der Position x₂ also rechtwinklig zur Oberfläche S verläuft. In diesem Fall spielt der der Durchmesser der Schleifscheibe 11 keine Rolle. Die Schleifscheibe wird immer an der Stelle x₂ auf der Oberfläche S aufsetzen. (lediglich die Auslenkung a des Aktors 20 wird im stationären Zustand (Position x₃) vom Durchmesser der Schleifscheibe abhängen). Ein senkrechtes Aufsetzen auf die Oberfläche ist jedoch in manchen Anwendungen ebenfalls unerwünscht, da so die Gefahr besteht, dass an der Stelle x₂ zu viel Material von der Oberfläche S abgetragen wird. Für ein gutes Resultat ist es in manchen Anwendungen wünschenswert, dass beim Aufsetzen der Schleifscheibe 11 auf die Oberfläche 11 die Schleifmaschine bereits die Soll-Vorschubgeschwindigkeit parallel zur Oberfläche S hat. Unter diesem Gesichtspunkt, kann der in Fig. 7c dargestellte Ansatz (Parallelverschieben des TCP) besser sein.

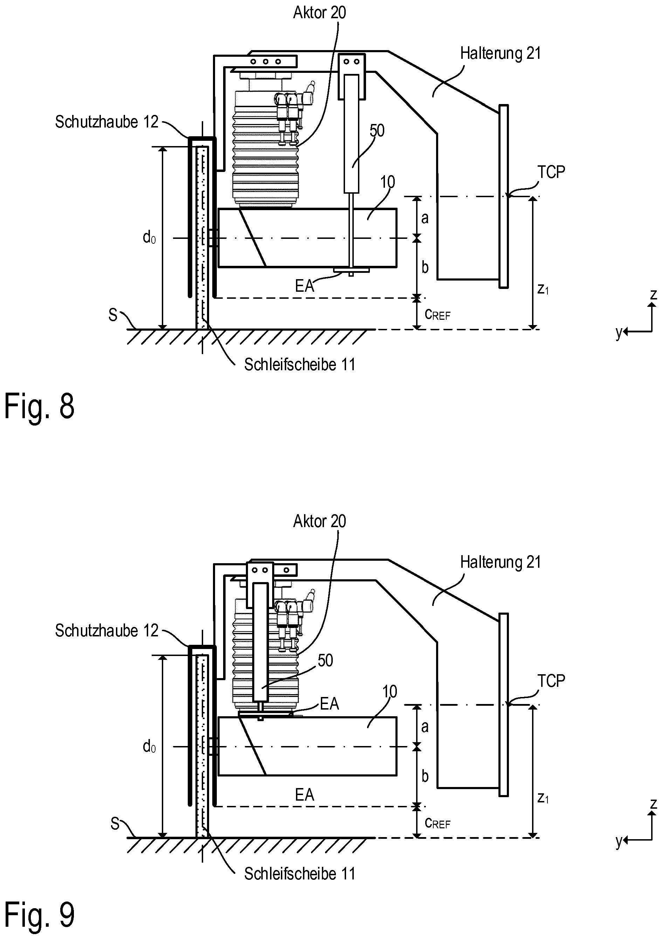

Mit den in Fig. 8 und 9 dargestellten Ausführungsbeispielen kann das gleiche Ergebnis wie in Fig. 7c erreicht werden, jedoch ohne die die Notwendigkeit der Anpassung der TCP-Trajektorie des Manipulators 1. Wie bereits erwähnt liegt der kraftgeregelte Aktor 20 an seinem Endanschlag an (Auslenkung a entspricht der maximalen Auslenkung a_{MAX}), solange kein Kontakt zwischen Oberfläche S des Werkstücks W und der Schleifscheibe 11 besteht. Die Position der Schleifscheibe 11 relativ zur Oberfläche wird also von der Lage des TCP (siehe Fig. 8 oder 9, Abstand z₁) und die Maximalauslenkung a_{MAX} des Aktors bestimmt. In den Beispielen gemäß Fig. 8 und 9 ist der Abstand zwischen Oberfläche S und der Drehachse R der Schleifscheibe 11 gleich z₁-a_{MAX} (solange kein Kontakt besteht, danach zi-a). Statt einer Verschiebung der TCP-Trajektorie hin zur Oberfläche, könnte auch der Endanschlag des Aktors 20 näher hin zur Oberfläche verschoben werden. Dies hätte zur Folge, dass die Maximalauslenkung a_{MAX} größer wird und im Ergebnis erhält man das gleiche Ergebnis wie bei einer Verschiebung der TCP-Trajektorie.

Die Beispiele in Fig. 8 und 9 sind im Wesentlichen identisch zu dem Beispiel aus Fig. 6 abgesehen von einem einstellbaren Endanschlag EA für den Aktor 20. In beiden Beispielen (Fig. 8 und 9) kann der Endanschlag EA relativ zur Halterung 21 mittels eines Stellelements 50 (z.B. elektrischer Linearaktor, Spindelantrieb, oder ein beliebiges anderes Stellelement mit und ohne eigenen Antrieb) angepasst werden. In dem Beispiel aus Fig. 9 liegt das untere Ende des Aktors 20 direkt am (über das Stellelement 50 einstellbaren) Endanschlag EA an. In dem Beispiel aus Fig. 8 liegt das untere Ende des Motorgehäuses der Schleifmaschine an Endanschlag EA an. Auch wenn in Fig. 8 das Motorgehäuse am Endanschlag EA anliegt, wirkt der Endanschlag dennoch als Endanschlag für den Aktor 20, da die Schleifmaschine 10 mit dem unteren Ende des Aktors 20 starr verbunden ist.

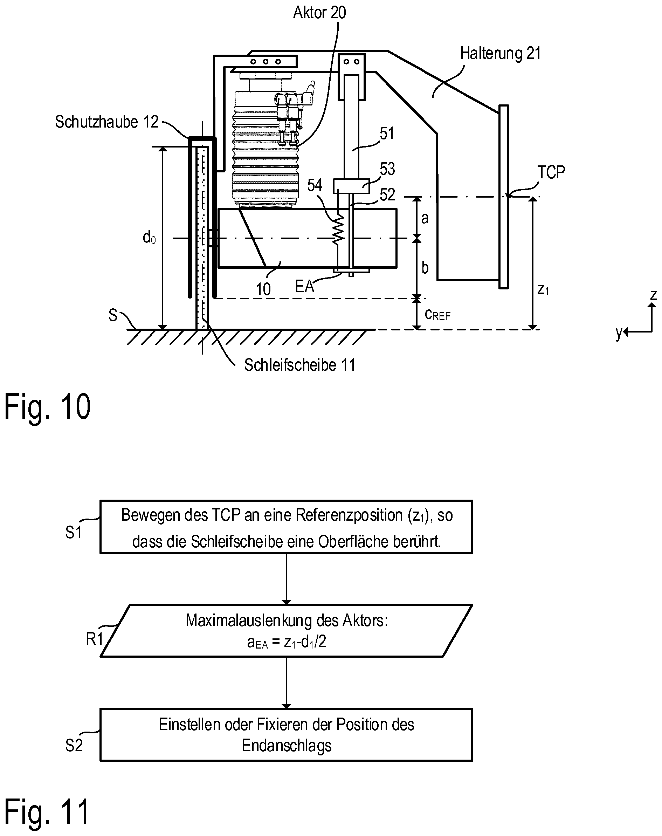

Das Stellelement zur Einstellung des Endanschlags EA kann auch durch den Aktor 20 und einem rein passiven Element (wie z.B. eine Bremse bzw. ein Blockierelement) gebildet werden. Das in Fig. 10 gezeigte Beispiel ist im Wesentlichen identisch mit dem Beipsiel aus Fig. 8, wobei das Stellelement 50 durch eine (Kolben-) Stangenbremse (*rod blocking device*) ersetzt wurde. Eine Stangenbremse ist im Wesentlichen eine in einer Linearführung 51 geführte Stange 52, die an einer beliebigen Position (innerhalb eines definierten Verschiebebereichs) mittels eines Blockierelementes 53 (z.B. ein elektromechanische oder pneumatische Bremse/Klemme) fixiert werden kann. Stangenbremsen sind ans sich bekannt und werden daher nicht weiter erläutert. Damit bei gelöstem Blockierelement 53 kann der Endanschlag EA z.B. mit einem Federelement 54 zur Schleifmaschine 10 hin gezogen werden, um den Endanschlag EA an der gewünschten Position am Gehäuse der Schleifmaschine 10 zu halten. Bei aktiviertem Blockierelement (Stange 52 ist in der Führung 51 blockiert) hat die Federkraft des Federelementes 54 keine Auswirkung mehr (das Federelement 54 wirkt dann nicht auf den Aktor 20 zurück). Das Federelement (54) ist je nach Referenzposition des TCP optional. Beispielsweise kann die Referenzposition des TCP so gewählt sein, dass die Schleifscheibe "kopfüber" (*upside down*) an der Oberfläche S anliegt. In diesem Fall genügt die Gewichtskraft der Kolbenstange 52, um diese auch bei gelöster Bremse 53 in der gewünschten Position (am Gehäuse der Schleifmaschine 10 anliegend) zu halten.

Zum Einstellen der Position des Endanschlags EA kann der Manipulator den TCP an eine bestimmte Referenzposition (Abstand) relativ zu einer Referenzoberfläche S bewegen (wie z.B. in Fig. 8, Abstand zi zur Oberfläche), wobei die Schleifscheibe S die Oberfläche S berührt. Die Stangenbremse ist dabei gelöst (inaktiv). Die Auslenkung a_{EA} des Aktors 20 hängt dabei von dem aktuellen Durchmesser d₁ der Schleifscheibe 11 ab. In dieser Referenzposition (TCP in Position z₁) wird die Stangenbremse blockiert, was zur Folge hat, dass die aktuelle Auslenkung a_{EA} des Aktors 20 als Maximalauslenkung (und damit de facto als Position des Endanschlags) "gespeichert" wird. Die Position des Endanschlages a_{EA} (a_{EA}=z₁-d₁/2) wird dabei so eingestellt, dass im Schleifbetrieb, die Schleifscheibe 11 immer bei einer TCP-Position z=zi aufsetzt (vgl. Fig. 7), unabhängig vom tatsächlichen Durchmesser d₁ der Schleifscheibe 11 (eine Änderung des Durchmessers d1 wird durch eine Änderung der Position a_{EA} kompensiert).

Figur 11 illustriert anhand eines Flow-Charts ein Beispiel eines Verfahrens zum Betrieb einer robotergestützten Schleifvorrichtung mit automatischer Einstellung/Anpassung des Endanschlags EA, der die Maximalauslenkung a_{EA} des Aktors 20 festlegt. Geeignete Schleifvorrichtungen wurden weiter oben unter Bezugnahme auf Fig. 7 bis 10 beschrieben. Zunächst bewegt der Manipulator 1 seinen TCP in eine Referenzposition (relativ zu einer Oberfläche S), die in den Beispielen aus Fig. 8-10 mit z=zi bezeichnet ist (Fig. 11, Schritt S1). In dieser Referenzposition berührt die Schleifscheibe 11 die Oberfläche S; die Auslenkung des Aktors A hängt dabei von dem aktuellen Durchmesser d₁ der Schleifscheibe ab. In den Beispielen aus Fig. 8-10 gilt a=z₁-d₁/2 (Fig. 11, Resultat R1). Diese Auslenkung kann als Maximalauslenkung "gespeichert" werden, z.B. indem die Kolbenstangebremse aktiviert wird (vgl. Fig. 10) oder indem mittels eines Stellelementes 50 die Position des Endanschlag EA so angepasst wird (vgl. Fig. 8 oder 9), dass die aktuelle Auslenkung a des Aktors 20 zur Maximalauslenkung a_{EA} wird.

## Patentansprüche

1. Eine Vorrichtung zum robotergestützten Schleifen, die folgendes aufweist:
einen Manipulator (1);
einen Linearaktor (20);
eine Schleifmaschine (10) mit einem rotierenden Schleifwerkzeug (11), wobei die Schleifmaschine (10) mit dem Manipulator (1) über den Linearaktor (20) gekoppelt ist;
einen Endanschlag (EA), der die maximale Auslenkung des Linearaktors (20) definiert, wobei die Position (a_{EA}) des Endanschlags (EA) einstellbar ist;
**dadurch gekennzeichnet, dass**
die Vorrichtung weiter eine Steuerung (4) umfasst, die dazu ausgebildet ist:
einen Tool-Center-Point (TCP) des Manipulators (1) an eine Referenzposition zu bewegen, in der das rotierende Schleifwerkzeug (11) eine Oberfläche (S) berührt, und
die Position (a_{EA}) des Endanschlages (EA) abhängig von einer aktuellen Auslenkung (a) des Aktors (20) einzustellen.

2. Die Vorrichtung gemäß Anspruch 1, wobei die Steuerung (4) weiter dazu ausgebildet ist:
die Position (a_{EA}) des Endanschlages (EA) derart einzustellen, dass eine maximale Auslenkung des Linearaktors (20), die durch die Position (a_{EA}) des Endanschlages (EA) definiert ist, gleich der aktuellen Auslenkung (a) des Aktors (20) ist.

3. Die Vorrichtung gemäß Anspruch 1 oder 2, die weiter aufweist:
ein Stellelement (50), das dazu ausgebildet ist, die Position (a_{EA}) des Endanschlags (EA) einzustellen.

4. Die Vorrichtung gemäß einem der Ansprüche 1 bis 3,
wobei das Stellelement (50) eine Stangenbremse (51, 52, 53) umfasst.

5. Die Vorrichtung gemäß einem der Ansprüche 1 bis 3,
wobei das Stellelement (50) einen elektrischen Linearantrieb umfasst.

6. Die Vorrichtung gemäß einem der Ansprüche 1 bis 5, wobei die Steuerung (4) weiter dazu ausgebildet ist, die Position (a_{EA}) des Endanschlags (EA) abhängig von einem Durchmesser (d₁) des rotierenden Schleifwerkzeugs einzustellen.

7. Die Vorrichtung gemäß Anspruch 4, wobei die Steuerung (4) weiter dazu ausgebildet ist:
die Stangenbremse zu lösen;
den Tool-Center-Point (TCP) des Manipulators (1) an die Referenzposition zu bewegen;
die Stangenbremse zu aktivieren, um die Position des Endanschlags (EA) zu fixieren.

8. Ein Verfahren zum Betrieb einer robotergestützten Schleifvorrichtung, die einen Manipulator (1), einen Linearaktor (20) mit einem einstellbaren Endanschlag (EA), und eine Schleifmaschine (10) mit einem rotierenden Schleifwerkzeug (11) aufweist,
wobei die Schleifmaschine (10) mit Manipulator (1) über den Linearaktor (20) gekoppelt ist;
das Verfahren weist auf:
Einstellen einer Position (a_{EA}) des Endanschlags (EA) des Linearaktors (20);
**dadurch gekennzeichnet, dass**
das Einstellen der Position (a_{EA}) des Endanschlags (EA) umfasst:
Bewegen eines Tool-Center-Points (TCP) des Manipulators (1) an eine Referenzposition, in der das Schleifwerkzeug (11) eine Oberfläche (S) berührt,
Einstellen der Position (a_{EA}) des Endanschlages (EA) abhängig von einer aktuellen Auslenkung (a) des Aktors (20).

9. Das Verfahren gemäß Anspruch 8, bei dem das Einstellen der Position (a_{EA}) des Endanschlags (EA) weiter umfasst:
Einstellen der Position (aEA) des Endanschlages (EA) derart, dass eine maximale Auslenkung des Linearaktors (20), die durch die Position (a_{EA}) des Endanschlages (EA) definiert ist, gleich der aktuellen Auslenkung (a) des Aktors (20) ist.

10. Das Verfahren gemäß Anspruch 8 oder 9,
wobei die Position des Endanschlags (EA) abhängig von der Größe des Schleifwerkzeugs abhängt.

11. Das Verfahren gemäß einem der Ansprüche 8 bis 10,
wobei das Schleifwerkzeug eine Schleifscheibe (11) ist und die Position des Endanschlags (EA) abhängig von dem Durchmesser der Schleifscheibe (11) eingestellt wird.

12. Das Verfahren gemäß einem der Ansprüche 8 bis 10, bei dem das Einstellen der Position (a_{EA}) des Endanschlags (EA) weiter umfasst:
Lösen einer Stangenbremse, um eine Verschiebung der Position des Endanschlags (EA) zu ermöglichen;
Bewegen des Tool-Center-Points (TCP) des Manipulators (1) an die Referenzposition; und
aktivieren der Stangenbremse, um die Position des Endanschlags (EA) zu fixieren.

## Claims

1. An apparatus for robot-aided grinding, having:
a manipulator (1);
a linear actuator (20);
a grinding machine (10) with a rotating grinding tool (11), wherein the grinding machine (10) is coupled to the manipulator (1) via the linear actuator (20);
an end stop (EA) which defines the maximum deflection of the linear actuator (20), wherein the position (a_{EA}) of the end stop (EA) is adjustable;
**characterized in that**
the apparatus further comprises a controller (4) which is designed to:
move a tool center point (TCP) of the manipulator (1) to a reference position in which the rotating grinding tool (11) touches a surface (S),
and adjust the position (a_{EA}) of the end stop (EA) depending on a current deflection (a) of the actuator (20).

2. The apparatus according to claim 1, wherein the controller (4) is further designed to:
adjust the position (a_{EA}) of the end stop (EA) such that a maximum deflection of the linear actuator (20), which is defined by the position (a_{EA}) of the end stop (EA), is equal to the current deflection (a) of the actuator (20).

3. The apparatus according to claim 1 or 2, further having:
an adjusting element (50) which is designed to adjust the position (a_{EA}) of the end stop (EA) .

4. The apparatus according to any one of claims 1 to 3, wherein the adjusting element (50) comprises a rod brake (51, 52, 53).

5. The apparatus according to any one of claims 1 to 3, wherein the adjusting element (50) comprises an electric linear drive.

6. The apparatus according to any one of claims 1 to 5, wherein the controller (4) is further designed to adjust the position (a_{EA}) of the end stop (EA) depending on a diameter (d₁) of the rotating grinding tool.

7. The apparatus according to claim 4, wherein the controller (4) is further designed to:
release the rod brake;
move the tool center point (TCP) of the manipulator (1) to the reference position;
activate the rod brake to fix the position of the end stop (EA).

8. A method for operating a robot-aided grinding apparatus which has a manipulator (1), a linear actuator (20) with an adjustable end stop (EA), and a grinding machine (10) with a rotating grinding tool (11),
wherein the grinding machine (10) is coupled to the manipulator (1) via the linear actuator (20);
wherein the method comprises:
adjusting a position (a_{EA}) of the end stop (EA) of the linear actuator (20);
**characterized in that**
adjusting the position (a_{EA}) of the end stop (EA) comprises:
moving a tool center point (TCP) of the manipulator (1) to a reference position in which the grinding tool (11) touches a surface (S),
adjusting the position (a_{EA}) of the end stop (EA) depending on a current deflection (a) of the actuator (20).

9. The method according to claim 8, wherein adjusting the position (a_{EA}) of the end stop (EA) further comprises:
adjusting the position (a_{EA}) of the end stop (EA) such that a maximum deflection of the linear actuator (20), which is defined by the position (a_{EA}) of the end stop (EA), is equal to the current deflection (a) of the actuator (20).

10. The method according to claim 8 or 9,
wherein the position of the end stop (EA) depends on the size of the grinding tool.

11. The method according to any one of claims 8 to 10,
wherein the grinding tool is a grinding wheel (11) and the position of the end stop (EA) is adjusted depending on the diameter of the grinding wheel (11).

12. The method according to any one of claims 8 to 10, wherein adjusting the position (a_{EA}) of the end stop (EA) further comprises:
releasing a rod brake to allow shifting of the position of the end stop (EA) ;
moving the tool center point (TCP) of the manipulator (1) to the reference position; and
activating the rod brake to fix the position of the end stop (EA) .

## Revendications

1. Dispositif de ponçage robotisé comportant les éléments suivants :
un manipulateur (1) ;
un actionneur linéaire (20) ;
une ponceuse (10) avec un outil de ponçage rotatif (11), dans lequel la ponceuse (10) est couplée au manipulateur (1) par l'intermédiaire de l'actionneur linéaire (20) ;
une butée finale (EA) qui définit la déviation maximale de l'actionneur linéaire (20), dans lequel la position (a_{EA}) de la butée finale (EA) est réglable ;
**caractérisé en ce que**
le dispositif comprend en outre une commande (4) qui est conçue pour :
déplacer un point central d'outil (TCP) du manipulateur (1) vers une position de référence dans laquelle l'outil de ponçage rotatif (11) touche une surface (S), et
régler la position (a_{EA}) de la butée finale (EA) en fonction d'une déviation actuelle (a) de l'actionneur (20).

2. Dispositif selon la revendication 1, dans lequel la commande (4) est en outre conçue pour :
régler la position (a_{EA}) de la butée finale (EA) de sorte qu'une déviation maximale de l'actionneur linéaire (20), qui est définie par la position (a_{EA}) de la butée finale (EA), est égale à la déviation actuelle (a) de l'actionneur (20).

3. Dispositif selon la revendication 1 ou 2, comportant en outre :
un élément de réglage (50) qui est conçu pour régler la position (a_{EA}) de la butée finale (EA).

4. Dispositif selon l'une des revendications 1 à 3,
dans lequel l'élément de réglage (50) comprend un frein à tige (51, 52, 53).

5. Dispositif selon l'une des revendications 1 à 3,
dans lequel l'élément de réglage (50) comprend un entraînement linéaire électrique.

6. Dispositif selon l'une des revendications 1 à 5, dans lequel la commande (4) est en outre conçue pour régler la position (a_{EA}) de la butée finale (EA) en fonction d'un diamètre (d₁) de l'outil de ponçage rotatif.

7. Dispositif selon la revendication 4, dans lequel la commande (4) est en outre conçue pour :
desserrer le frein à tige ;
déplacer le point central d'outil (TCP) du manipulateur (1) vers la position de référence ;
activer le frein à tige pour fixer la position de la butée finale (EA) .

8. Procédé de fonctionnement d'un dispositif de ponçage robotisé qui comporte un manipulateur (1), un actionneur linéaire (20) avec une butée finale réglable (EA) et une ponceuse (10) avec un outil de ponçage rotatif (11),
dans lequel la ponceuse (10) est couplée au manipulateur (1) par l'intermédiaire de l'actionneur linéaire (20) ;
le procédé comporte :
le réglage d'une position (a_{EA}) de la butée finale (EA) de l'actionneur linéaire (20) ;
**caractérisé en ce que**
le réglage de la position (a_{EA}) de la butée finale (EA) comprend :
le déplacement d'un point central d'outil (TCP) du manipulateur (1) vers une position de référence dans laquelle l'outil de ponçage (11) touche une surface (S),
le réglage de la position (a_{EA}) de la butée finale (EA) en fonction d'une déviation actuelle (a) de l'actionneur (20).

9. Procédé selon la revendication 8, dans lequel le réglage de la position (a_{EA}) de la butée finale (EA) comprend en outre :
le réglage de la position (a_{EA}) de la butée finale (EA) de sorte qu'une déviation maximale de l'actionneur linéaire (20), qui est définie par la position (a_{EA}) de la butée finale (EA), est égale à la déviation actuelle (a) de l'actionneur (20).

10. Procédé selon la revendication 8 ou 9,
dans lequel la position de la butée finale (EA) dépend de la taille de l'outil de ponçage.

11. Procédé selon l'une des revendications 8 à 10,
dans lequel l'outil de ponçage est une meule (11) et la position de la butée finale (EA) est réglée en fonction du diamètre de la meule (11).

12. Procédé selon l'une des revendications 8 à 10, dans lequel le réglage de la position (a_{EA}) de la butée finale (EA) comprend en outre :
le desserrage d'un frein à tige pour permettre le décalage de la position de la butée finale (EA) ;
le déplacement du point central d'outil (TCP) du manipulateur (1) vers la position de référence ; et
l'activation du frein à tige pour fixer la position de la butée finale (EA).
